# EUROPEAN PATENT APPLICATION

(11) **EP 3 989 115 A1**
(43) Date of publication of application: **27.04.2022**
(21) Application number: 21177445.0
(22) Date of filing: 02.06.2021
(51) Int. Cl.: G06K 9/00, G06K 9/46, G06K 9/62, G06T 7/149, G06K 9/32

(54) **METHOD AND APPARATUS FOR VEHICLE RE-IDENTIFICATION, TRAINING METHOD AND ELECTRONIC DEVICE**

(30) Priority: 20.10.2020 CN 202011123358
(71) Applicant: BEIJING BAIDU NETCOM SCIENCE TECHNOLOGY CO., LTD., No.10 Shangdi 10th Street Haidian District Beijing 100085 (CN)
(72) Inventor: JIANG, Minyue, Beijing (CN); TAN, XIAO, Beijing (CN); SUN, Hao, Beijing (CN)
(74) Representative: Gill Jennings & Every LLP

(57) **Abstract**

The present application discloses a method and an apparatus for vehicle re-identification, a training method, an electronic device and a storage medium, relating to the field of artificial intelligence, in particular, to technologies of computer vision, deep learning and intelligent transport. A specific implementation is: acquiring a picture of a target vehicle to be re-identified, determining a target two-dimensional image of the target vehicle based on the picture and a preset initial three-dimensional model, the initial three-dimensional model being generated based on sample three-dimensional information of a sample vehicle, and re-identifying the target two-dimensional image to generate and output an identification result. Since the sample three-dimensional information comprising information that can be used to describe relative information of respective dimensions of respective vehicles from a three-dimensional perspective, thus when the target two-dimensional image is determined based on the initial three-dimensional model, it can be implemented that the target two-dimensional image is able to describe relative information of the target vehicle in detail, and therefore the technical effect of accuracy and reliability of a re-identifying result determined based on the target two-dimensional image can be achieved.

## Description

### TECHNICAL FIELD

The present application relates to the field of artificial intelligence, and in particular, to a method and an apparatus for vehicle re-identification, a training method, an electronic device and a storage medium.

### BACKGROUND

In recent years, with the increasing amount of data captured by surveillance cameras, the demand for surveillance data analysis ability also increases rapidly. However, compared with the increasing speed of data amount, the development of data analysis technology is far from meeting the requirements. Vehicle re-identification technology aims to make up for the problem of angle limitation of fixed cameras, and can search for required specific vehicles across cameras, which not only saves steps of manual search, but also improves efficiency. Therefore, proper and effective use of vehicle re-identification technology is of great significance to criminal investigation tasks and intelligent surveillance tasks.

In the prior art, a usually adopted method for vehicle re-identification is: analyzing information of acquired vehicle images, determining appearance information of vehicles, such as vehicle type (truck, off-road vehicle, car, etc.) etc., and determine whether vehicles in different scenes are a same vehicle according to the appearance information.

However, some vehicles have little difference in appearance, and the appearance is easily affected by vehicle attitudes, which leads to low accuracy in re-identification.

### SUMMARY

The present application provides a method and an apparatus for vehicle re-identification, a training method, an electronic device and a storage medium used to improve accuracy in vehicle re-identification.

According to an aspect of the present application, a method for vehicle re-identification is provided, including:
acquiring a picture of a target vehicle to be re-identified;
determining a target two-dimensional image of the target vehicle based on the picture and a preset initial three-dimensional model, the initial three-dimensional model being generated based on sample three-dimensional information of a sample vehicle;
re-identifying the target two-dimensional image to generate and output an identification result.

In the present embodiment, re-identification is performed to a target vehicle through an initial three-dimensional model generated based on sample three-dimensional information, which can improve technical effects of accuracy and reliability of the re-identification.

According to another aspect of the present application, an apparatus for vehicle re-identification is provided, including:
an acquiring module, configured to acquire a picture of a target vehicle to be re-identified;
a first determining module, configured to determine a target two-dimensional image of the target vehicle based on the picture and a preset initial three-dimensional model, the initial three-dimensional model being generated based on sample three-dimensional information of a sample vehicle;
a re-identifying module, configured to re-identify the target two-dimensional image to generate and output an identifying result.

According to another aspect of the present application, an electronic device is provided, including:
at least one processor; and
a memory, communicatively connected to the at least one processor; where,
the memory stores instructions which are executable by the at least one processor, and the instructions are executed by the at least one processor, to cause the at least one processor to execute the method in any one of above-mentioned embodiments.

According to another aspect of the present application, a non-transitory computer-readable storage medium storing computer instructions is provided, the computer instructions are used to cause a computer to execute the method in any one of above-mentioned embodiments.

According to another aspect of the present application, a computer program product is provided, including: a computer program, where the computer program is stored in a readable storage medium, at least one processor of an electronic device can read the computer program from the readable storage medium, and the at least one processor executes the computer program to enable the electronic device to execute the method according to the above-mentioned aspect.

According to another aspect of the present application, a computer program stored in a readable storage medium is provided, where at least one processor of an electronic device can read the computer program from the readable storage medium, and the at least one processor executes the computer program to enable the electronic device to execute the method according to the above-mentioned aspect.

According to another aspect of the present application, a method for model training is provided, including:
collecting sample information of a sample vehicle, the sample information of the sample vehicle including: sample three-dimensional information and a number of samples;
constructing an initial three-dimensional model according to the sample three-dimensional information and the number of samples, the initial three-dimensional model being configured to re-identify a target vehicle based on a picture of the target vehicle.

The present application provides a method and an apparatus for vehicle re-identification, a training method, an electronic device and a storage medium, including: acquiring a picture of a target vehicle to be re-identified, determining a target two-dimensional image of the target vehicle based on the picture and a preset initial three-dimensional model, the initial three-dimensional model being generated based on sample three-dimensional information of a sample vehicle, and re-identifying the target two-dimensional image to generate and output an identifying result. By introducing the initial three-dimensional model generated based on the sample three-dimensional information, since the sample three-dimensional information includes information that can be used to describe relative information of respective dimensions of respective vehicles from a three-dimensional perspective, thus when the target two-dimensional image is determined based on the initial three-dimensional model, it can be implemented that the target two-dimensional image is able to describe relative information of the target vehicle in detail, and thus, an technical effect of accuracy and reliability of the re-identifying result determined based on the target two-dimensional image can be achieved.

It should be understood that the content described in this part does not intend to identify key or important features of the embodiments of the present application, nor is used to limit the scope of the present application. Other features of the present application will be easier to understand by the following specification.

### BRIEF DESCRIPTION OF DRAWINGS

The accompanying drawings are used to better understand the present solution, but do not limit the present application, where:
FIG. 1 is a schematic diagram illustrating an application scenario of a method for vehicle re-identification of an embodiment of the present application.
FIG. 2 is a schematic flow chart illustrating a method for vehicle re-identification of an embodiment of the present application.
FIG. 3 is a schematic flow chart illustrating a method for vehicle re-identification of another embodiment of the present application.
FIG. 4 is a schematic flow chart illustrating a method for vehicle re-identification of another embodiment of the present application.
FIG. 5 is a schematic flow chart illustrating a method for vehicle re-identification of another embodiment of the present application.
FIG. 6 is a schematic diagram illustrating an apparatus for vehicle re-identification of an embodiment of the present application.
FIG. 7 is a schematic diagram illustrating an apparatus for vehicle re-identification of another embodiment of the present application.
FIG. 8 is a block diagram illustrating an electronic device of a method for vehicle re-identification of an embodiment of the present application.
FIG. 9 is a schematic flow chart illustrating a method for model training of an embodiment of the present application.

### BRIEF DESCRIPTION OF EMBODIMENTS

Illustrative embodiments of the present application will be illustrated below with reference to the accompanying drawings, where various details of the embodiments of the present application are included to help understanding, which should only be considered as illustrative. Therefore, those of ordinary skills in the art should appreciate that, the embodiments described herein can be changed and modified without deviating from the scope and spirit of the present application. Also, for clarity and brevity, the descriptions of commonly-known functions and structures are omitted.

As the number of vehicles increases continuously and the demand for reliability of vehicle travel gets higher, vehicle re-identification technology emerged. Vehicle re-identification technology may be considered as a technology to determine a target vehicle from a plurality of vehicles.

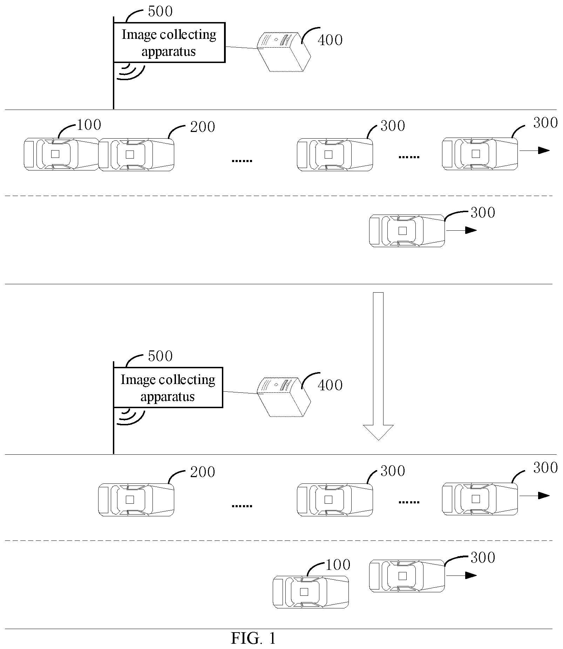

In order to improve reliability of vehicle re-identification and improve safety of vehicle travel, an embodiment of the present application provides a method for vehicle re-identification, and the method of the embodiment of the present application may be applied in an application scenario as shown in FIG. 1, which is a schematic diagram illustrating an application scenario of the method for vehicle re-identification of the embodiment of the present application.

In the application scenario as shown in FIG.1, a target vehicle 100 is a vehicle causing a traffic accident, and in the application scenario as shown in FIG.1, the traffic accident is specifically a rear-end accident, that is, the target vehicle 100 is a vehicle causing the rear-end accident, a vehicle rear-ended by the target vehicle 100 is called an accident vehicle 200, vehicles except for the accident vehicle 200 are all called other vehicles 300, that is, the other vehicles 300 include the target vehicle 100.

As shown in FIG. 1, the accident vehicle 200 drives in front of the target vehicle 100, and is rear-ended by the target vehicle 100, resulting in the rear-end accident.

However, after resulting in the traffic rear-end accident, the target vehicle 100 continues to drive, and mixes into the other vehicles 300, becoming one of the other vehicles 300.

A server 400 can acquire a picture of the target vehicle 100 through an image collecting apparatus 500 (such as a camera and alike) set on a side of the road, and determine the target vehicle 100 from the other vehicles 300 according to the picture of the target vehicle 100, and can determine a driving track of the target vehicle 100, so as to locate and track the target vehicle 100.

It is worth to note that, the above-mentioned application scenario is only used to illustratively describe a possible application scenario of the method for vehicle re-identification of the embodiment of the present application, but cannot be considered as specific limitation to the application scenario of the method for vehicle re-identification of the embodiment of the present application.

In related art, in order to implement the re-identification of the target vehicle, a generally adopted method is: determining appearance features related to the appearance of the target vehicle based on the picture of the target vehicle, and determining the target vehicle from the other vehicles based on the appearance features.

However, the appearance of a vehicle is easily affected by an attitude of the vehicle, and some vehicles have little difference in appearance, and therefore, adopting the solution in related art may cause a problem of low accuracy in re-identification.

The inventors of the present application have acquired the inventive idea of the present application with creative efforts: generating an initial three-dimensional model based on sample three-dimensional information of a sample vehicle, identifying a target vehicle from other vehicles based on the initial three-dimensional model and a picture of the target vehicle, so as to improve accuracy and reliability of vehicle re-identification.

The following will illustrate technical solutions and how the technical solutions can solve the above-mentioned technical problem in detail with reference to specific embodiments of the present application. The following specific embodiments can be combined to each other, and same or similar concepts or procedures may not be repeated in some embodiments. The following will describe the embodiments of the present application with reference to the accompanying drawings.

The present application provides a method for vehicle re-identification, applied to technical fields of artificial intelligence, autonomous driving, intelligent transportation and deep learning, so as to achieve the technical effect of improving the accuracy and reliability of vehicle re-identification.

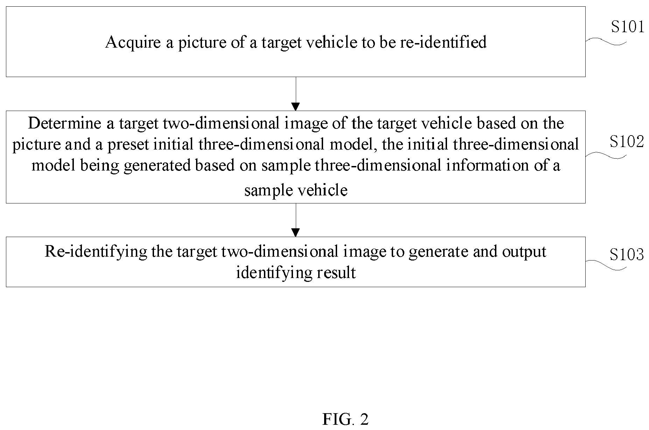

Referring to FIG.2, FIG. 2 is a schematic flow chart illustrating a method for vehicle re-identification of an embodiment of the present application.

As shown in FIG. 2, the method includes:
S101: acquire a picture of a target vehicle to be re-identified.

An executive entity of the method for vehicle re-identification of the present embodiment may be an apparatus for vehicle re-identification, and the apparatus for vehicle re-identification may be a server (including a local server and a cloud server), a processor, a terminal device and a chip, etc., which is not limited by the present embodiment.

For example, when the method for vehicle re-identification of the present application is applied to an application scenario as shown in FIG. 1, the apparatus for vehicle re-identification can be a server as shown in FIG. 1.

The present embodiment will be illustratively described by taking that the apparatus for vehicle re-identification is a server as an example.

It should be understood that, the "target" in the target vehicle is used to distinguish other vehicles (such as sample vehicles and alike) in the following, and should not be understood as limitations to vehicles.

With reference to the application scenario as shown in FIG. 1, the step can be understood as: if the target vehicle causes a traffic accident (such as a rear-end accident described in the above-mentioned application scenario), the server may acquire the picture of the target vehicle.

It is worth to note that, the present embodiment does not limit the method of acquiring pictures, for example:
In a possible solution, the server may acquire the picture from video information transmitted by an image collecting apparatus, and the picture may be a picture when the target vehicle causes the rear-end accident.

In another possible solution, the server may acquire the picture of the target vehicle from a preset data base. For example, the server receives an identification (such as a license plate number) of the target vehicle inputted by a traffic platform, and acquires the picture from the data base according to the identification.

In another possible solution, the server may receive the picture inputted by an operator through for example, uploading to the server by scanning.

It should be understood that, the above-mentioned examples are only used to illustratively describe the methods that may be adopted to acquire the picture by the server, but should not be considered as limitations to the method of acquiring the picture by the server, other methods of acquiring the picture by the server will not be listed herein.

S102: determine a target two-dimensional image of the target vehicle based on the picture and a preset initial three-dimensional model, the initial three-dimensional model being generated based on sample three-dimensional information of a sample vehicle;
Similarly, the "initial", "target" and "sample" in the step cannot be understood as limitations to respective corresponding contents.

The sample three-dimensional information may be used to characterize related information of the sample vehicle from a three-dimensional perspective, such as three-dimensional size of the sample vehicle, names of respective components of the sample vehicle, and relationships between respective components of the sample vehicle, etc.

The initial three-dimensional model may be understood as a neural network model, and the neural network model is generated based on the sample three-dimensional information.

It is worth to note that, in the present embodiment, a concept of initial three-dimensional model is introduced, and the initial three-dimensional model is generated based on the sample three-dimensional information.

With reference to the application scenario shown in FIG. 1, the step may be understood as: when the server determines the target three-dimensional image based on the initial three-dimensional model and the picture, since the initial three-dimensional model is generated based on the sample three-dimensional information, the sample three-dimensional information can be used to describe the related information of respective dimensions of respective vehicles from the three-dimensional perspective, and therefore, when the server determines the target two-dimensional image based on the initial three-dimensional model, it can be implemented that the target two-dimensional image provides a relative detailed description of the related information of the target vehicle.

Therefore, in the step, when the target two-dimensional image is determined based on the initial three-dimensional model, the analysis on the image can be implemented from a three-dimensional perspective to implement comprehensive and complete analysis, so as to make the target two-dimensional image able to characterize the related information of the target vehicle accurately and vividly, and further, the technical effect of improving the accuracy and reliability of an identifying result can be achieved when the identifying result is determined based on the target two-dimensional image.

S103: re-identify the target two-dimensional image to generate and output an identifying result.

With reference to the application scenario as shown in FIG. 1, the step may be understood as: the server performs re-identification based on the target two-dimensional image, so as to determine the target vehicle from other vehicles, and thus generate and output the identifying result.

In a possible solution, the server may be connected to a display device, and may send the identifying result to the display device to display the identifying result through the display device.

The display device may be used to present a device displaying videos, such as a liquid crystal display (LCD), a light emitting diode (LED) display and an organic light emitting (OLED) display, etc., which is not limited by the embodiment of the present application.

In another possible solution, the server may be connected to a voice device, and may send an identifying result to the voice device to broadcast the identifying result through the voice device.

The identifying result may be converted into audio information by the server, and the audio information is sent to the voice device, and the voice device performs voice broadcast based on the audio information; or, the identifying result may be sent to the voice device by the server, and the voice device converts the identifying result into audio information and performs voice broadcast based on the audio information.

In another possible solution, the display device and the voice device may be an integrated device (such as a terminal device), and the server may send the identifying result to the integrated device, and the integrated device displays the identifying result and performs voice broadcast of the identifying result.

It is worth to note that, the above-mentioned examples are only used to illustratively describe the method of outputting the identifying result that may be adopted by the server, and should not be understood as limitations to the method of outputting the identifying result.

Based on the above-mentioned analysis, the embodiment of the present application provides a method for vehicle re-identification, including: acquiring a picture of a target vehicle to be re-identified, determining a target two-dimensional image of the target vehicle based on the picture and a preset initial three-dimensional model, the initial three-dimensional model being generated based on sample three-dimensional information of a sample vehicle, and re-identifying the target two-dimensional image to generate and output an identifying result. By introducing an initial three-dimensional model generated based on sample three-dimensional information, since the sample three-dimensional information includes information that can be used to describe relative information of respective dimensions of respective vehicles from a three-dimensional perspective, thus when the target two-dimensional image is determined based on the initial three-dimensional model, it can be implemented that the target two-dimensional image is able to give a relatively detailed description on relative information of the target vehicle, and thus the technical effect of accurate and reliable re-identifying result determined based on the target two-dimensional image can be achieved.

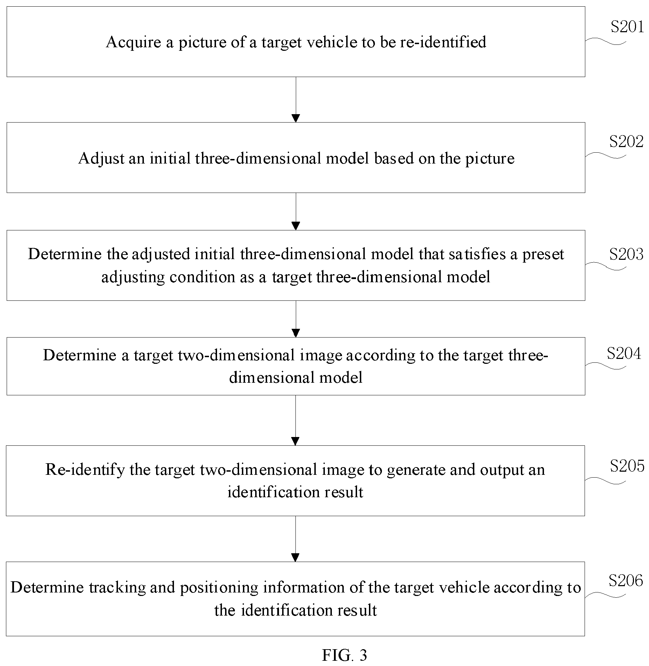

In order to make the readers have a deeper understanding of the method for vehicle re-identification of the embodiment of the present application, the method in the embodiment will be described in more detail from a perspective of generating the target two-dimensional image based on the initial three-dimensional model with reference to FIG. 3.

As shown in FIG. 3, the method includes:
S201: acquire a picture of a target vehicle to be re-identified.
   for the description related to S201, reference can be made to S101, which will not be repeated here.
S202: adjust, an initial three-dimensional model based on the picture;
   For example, a server may make an adjustment, such as stretching, shrinking and rotating, on the initial three-dimensional model based on the picture.
S203: determine the adjusted initial three-dimensional model that satisfies a preset adjusting condition as a target three-dimensional model, where the adjusting condition includes: a similarity between the adjusted initial three-dimensional model and the picture is greater than a preset similarity threshold.

Similarly, the "target" in the target three-dimensional model in the step should not be considered as a limitation to the content of the three-dimensional model.

It can be known with reference to S202, that the server can adjust the initial three-dimensional model based on the picture, and the methods of adjusting include, but are not limited to, stretching, shrinking and rotating, and in the step, if the adjusted initial three-dimensional model has a similarity greater than the similarity threshold to the picture after being adjusted by at least one above-mentioned adjusting method, the adjusted initial three-dimensional model can be determined as the target three-dimensional model, that is, the target three-dimensional model has a relatively high similarity to the picture.

Here, the similarity threshold can be set by the server based on requirements, historical records, experiments, etc., and the present embodiment does not put a limitation on it.

For example, the following description takes that the server sets the similarity threshold based on requirements as an example:
Requirements may be considered as requirements on accuracy of the identifying result, for a scenario with a high requirement, that is, a scenario with a high requirement on accuracy of the identifying result, the similarity threshold may be set as a relatively high value; by contrast, for a scenario with a low requirement, that is, a scenario with a low requirement on accuracy of the identifying result, the similarity threshold can be set as a relatively low value.

Specifically, S202 and S203 can be understood as: the server adjusts the initial three-dimensional model, and calculates the similarity between the initial three-dimensional model and the picture after each time of adjusting, and judges whether the similarity is greater than the similarity threshold. If the similarity is smaller than or equal to the similarity threshold, the adjustment to the initial three-dimensional model is continued, and specifically can be performed based on the difference between the similarity and the similarity threshold. For example, if the difference between the similarity and the similarity threshold is relatively large, the adjustment to the initial three-dimensional model can be relatively large, and if the difference between the similarity and the similarity threshold is relatively small, the adjustment to the initial three-dimensional model can be relatively small. If the similarity is greater than or equal to the similarity threshold, the adjusted initial three-dimensional model with the similarity greater than or equal to the similarity threshold is determined as the target three-dimensional model.

S204: determine a target two-dimensional image according to the target three-dimensional model.

If the server determines the target three-dimensional model with a relatively high similarity to the picture, the target two-dimensional image can be determined based on the target three-dimensional model.

It is worth to note that, in the present embodiment, the target three-dimensional model with a high similarity to the picture is acquired by adjusting the initial three-dimensional model, and since the similarity between the target three-dimensional model and the picture is relatively high, when the target two-dimensional image is determined based on the three-dimensional model, accuracy and reliability of the target two-dimensional image can be improved, making the target two-dimensional image be highly consistent to the target vehicle, so as to achieve the technical effect of improving accuracy and reliability of the identifying result when the identifying result is determined based on the target two-dimensional image.

In some embodiments, S204 may include:
S2041: determine attribute information of respective target components of the target vehicle according to the target three-dimensional model.

Similarly, the "target" in the target components in the step should not be interpreted as a limitation to the components.

The attribute information may be understood as relative information describing the target components, such as names of the target components, size of the target components and association relationships among respective target components (for example, the association relationship between two target components is they are adjacent, or, they are bolted, etc.), etc.

It is worth to note that, since the initial three-dimensional model is generated based on the sample three-dimensional information, and the target three-dimensional model is generated based on adjustments on the initial three-dimensional model, the target three-dimensional model can also be characterized through the sample three-dimensional information, and the sample three-dimensional information includes relative information of the sample vehicle, and therefore, the attribute information can be determined based on the target three-dimensional model, and since the target three-dimensional model has a high similarity to the picture, therefore, the attribute information can be used to characterize the relative information of respective target components of the target vehicle accurately.

S2042: splice the respective components according to the attribute information to generate the target two-dimensional image.

It can be known with reference to the above-mentioned analysis, the attribute information can describe the relative information of respective target component, such as names, size, and association relationships among respective target components, therefore, in the step, the server can generate, based on the attribute information, the two-dimensional image (i.e. the target two-dimensional image) of the target vehicle, which is used to characterize the relative information of the target vehicle.

It is worth to note that, in the present embodiment, since the similarity between the target three-dimensional model and the picture is relatively high, therefore, the attribute information can be used to characterize the relative information of respective target components of the target vehicle, and when the target two-dimensional image is generated based on the attribute information, the target two-dimensional image is enabled to have high accuracy and reliability, and when the identifying result is generated based on the target two-dimensional image, the identifying result is enabled to have the technical effect of high accuracy and high reliability.

In some embodiments, the attribute information includes: identifications of the target components and three-dimensional parameters of the target components, and S2042 may include:
S20421: determine association relationships among the respective target components according to the identifications of the target components.

The identifications of the target components may be the names described in the above examples, or identifications assigned to the target components by the server.

S20422: splice the respective target components according to the connecting relationships and the three-dimensional parameters of the respective target components to generate the target two-dimensional image.

For example, the server may splice the respective target components to the two-dimensional image based on the connecting relationships, and on the basis of that, adaptively adjust the spliced two-dimensional image based on the three-dimensional parameters of the respective target components, so that the target two-dimensional image not only describes the target vehicle from the connecting relationships of the respective target components, but also describes the target vehicle in size.

It is worth to note that, in the present embodiment, since the two-dimensional image can describe the target vehicle from two dimensions, for example, from a dimension of the connecting relationships of the respective target components, or from a dimension of the size of the respective target components, the technical effect of improving the accuracy and reliability of the description to the target vehicle by the target two-dimensional image can thus be achieved.

S205: re-identify the target two-dimensional image to generate and output an identification result.

For the description of S201, reference can be made to S101, which will not be repeated here.

S206: determine tracking and positioning information of the target vehicle according to the identification result.

It can be known based on the above analysis, that the identifying result can be understood as that the server determines the target vehicle from other vehicles, and in the step, the server can continue to determine the tracking and positioning information of the target vehicle.

The tracking and positioning information may include position information of the target vehicle, and may also include, on the basis of the position information, environment information around the position information, etc., which will not be listed here one by one.

With reference to the above-mentioned embodiment, when the server is connected to a display device and the identifying result is displayed by the display device, the display device can also display the tracking and positioning information, and statically display the identifying result and the tracking and positioning information, for example, display the identifying result of the target vehicle (a real object of the target vehicle in the actual scenario) and the current position information; or display the identifying result dynamically, for example, display the identifying result of the target vehicle (a real object of the target vehicle in the actual scenario) and a driving track of the target vehicle in a certain period of time, and mark current position information of the target vehicle on the driving track, etc., which will not be listed here one by one.

It is worth to note that, in the present embodiment, the server determines the tracking and positioning information through the identifying result, and since the identifying result is the target vehicle determined from other vehicles accurately, therefore, when the tracking and positioning information is determined based on the identifying result, accuracy and reliability of the tracking and positioning information can be improved, thereby achieving the technical effect of accurate tracking and positioning of the target vehicle.

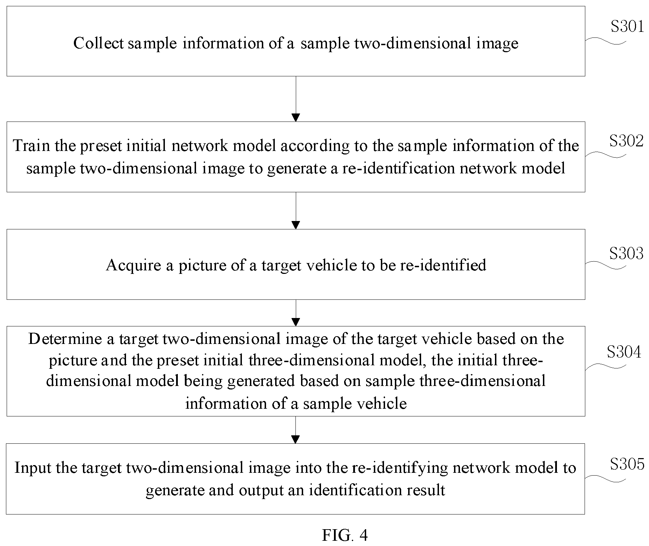

In order to make the readers have a deeper understanding of the method for vehicle re-identification of the embodiments of the present application, the method in the embodiment will be described in more detail in the dimension of the re-identification to the target two-dimensional image with reference to FIG. 4.

As shown in FIG. 4, the method includes:
S301: collect sample information of a sample two-dimensional image.

Similarly, the "sample" in the sample two-dimensional image of the step should not be the limitation to the contents of the sample two-dimensional image.

Here, the sample two-dimensional image can be understood as a two-dimensional image of a sample vehicle collected by a server. And the present embodiment does not limit the number of sample vehicles, that is, the present embodiment does not limit the number of two-dimensional images, which can be set specifically based on requirements, historical records and experiments, etc., by the server, and for the principle of setting, reference can be made to the above-mentioned embodiments, which will not be repeated here.

S302: train a preset initial network model according to the sample two-dimensional image to generating a re-identifying network model.

The present embodiment does not limit a type and a structure of the initial network model. For example, the initial network model may be a memory neural network model (long-term and short-term memory neural network model and bidirectional long-term and short-term memory neural network model), a convolutional neural network model and an adversarial neural network model; for another example, the number of channels and the number of convolution kernels of the initial network model can be set by the server based on requirements, historical records and experiments.

In some embodiments, S302 may specifically include: inputting the sample information of the sample two-dimensional image into the initial network model to generate a prediction result, comparing the prediction result to an actual result, and adaptively adjusting parameters of the initial network model based on a comparison result, until the comparison result satisfies a preset comparison requirement (for example, the comparison result is a loss value, the comparison requirement is that the loss value is smaller than a preset loss value threshold), or until a number of iteration times is equal to a preset time requirement, and determining the initial network model to which parameter adjustment has been performed as a network model for re-identification.

S303: acquire a picture of a target vehicle to be re-identified.

For the description of S201 reference can be made to S101, which will not be repeated here.

S304: determine a target two-dimensional image of the target vehicle based on the picture and a preset initial three-dimensional model, the initial three-dimensional model being generated based on sample three-dimensional information of a sample vehicle.

For the description of S304, reference can be made to S102, or can be made to S202-S204, which will not be repeated here.

S305: input the target two-dimensional image into the network model for re-identification to generate and output an identification result.

The step can be understood as: the server takes the target two-dimensional image as an input to the re-identifying network model, the re-identifying network model extracts and analyzes image features of the target two-dimensional image to generate the identifying result corresponding to the target two-dimensional image, that is, determining the target vehicle corresponding to the target two-dimensional image from the other vehicles.

It is worth to note that, in the present embodiment, generating the re-identifying network model through training, and identifying the target two-dimensional image through the re-identifying network model to acquire the identifying result, can improve identification efficiency of re-identification, and improve technical effects of accuracy and reliability of re-identification.

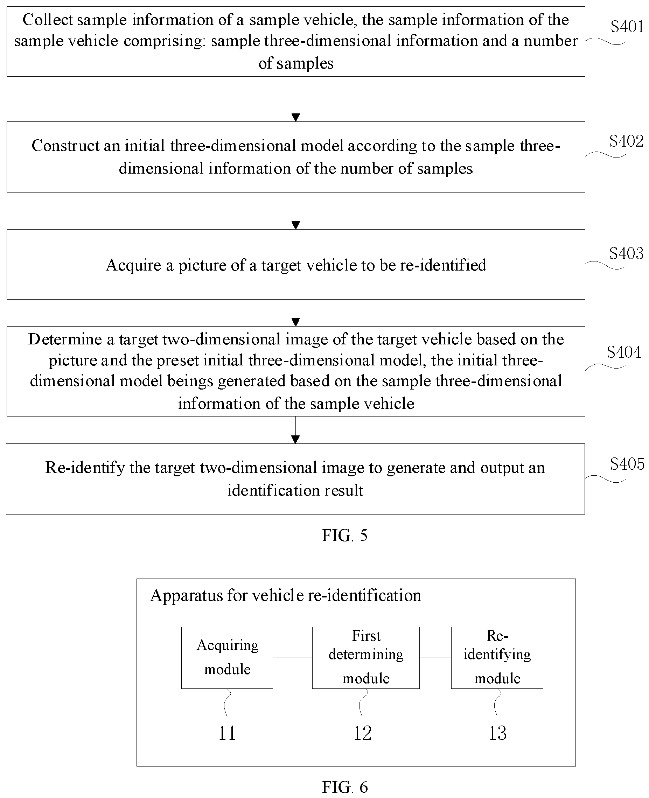

In order to make the readers have a deeper understanding of the method for vehicle re-identification of the embodiment of the present application, the method in the embodiment will be described in more detail in the dimension of constructing an initial three-dimensional model with reference to FIG. 5.

As shown in FIG. 5, the method includes:
S401: collect sample information of a sample vehicle, the sample information of the sample vehicle including: sample three-dimensional information and a number of samples.

Similarly, in the present embodiment, the sample information may be understood in two dimensions, one of which is relative information of the sample vehicle (i.e. three-dimensional information), while the other is relative information of the number of the sample vehicles (i.e. the number of samples).

The selection of sample vehicles and the number of samples may be performed by the server based on requirements, historical records and experiments, which is not limited by the present embodiment.

Preferably, sample vehicles cover various vehicle types as much as possible, that is, the sample three-dimensional information describes vehicles of various types as much as possible, so as to realize the construction of an initial three-dimensional model that specifically characterizes various sample vehicles through diversity of sample vehicles, thereby achieving the technical effect of improving the accuracy and reliability of re-identification.

S402: construct the initial three-dimensional model according to the sample three-dimensional information and the number of samples.

It is worth to note that, in the present embodiment, by collecting sample information of the sample vehicle, and constructing the initial three-dimensional model in the dimension of the sample three-dimensional information and the number of samples, it can be achieved that the initial three-dimensional model describes the features of the sample vehicle from multiple dimensions, thereby achieving that the initial three-dimensional model has relatively good ability in describing the relative information of the sample vehicle, thereby achieving the technical effect of improving the accuracy and reliability of re-identification when the re-identification is performed to the target vehicle based on the initial three-dimensional model.

In some embodiments, S204 may include:
S4021: determine average three-dimensional information according to the sample three-dimensional information and the number of samples.

For example, if the number of samples is 0.4 million, that is, there are 0.4 million sample vehicles, so information with 1.2 million dimensions (i.e. 0.4 million^{∗}3) may be contained in total, and through the information of 1.2 million dimensions, average values of the information of respective dimensions can be calculated to acquire average information of respective dimensions (i.e. the average three-dimensional information).

S4022: train a preset basic model framework according to the average three-dimensional information to generate the initial three-dimensional model.

The basic model framework may be understood as a preset structural framework and a coordinate system of the vehicle, and the coordinate system may be preset by the server.

The step may be understood as: adaptively adjusting parameters of a basic model framework based on average three-dimensional information to generate an initial three-dimensional model, and since the initial three-dimensional model is generated by the average three-dimensional information, the initial three-dimensional model is equivalent to an average model of respective sample vehicles, and the relative information of the respective vehicles can be acquired by adaptively adjusting the initial three-dimensional model.

It is worth to note that, in the present embodiment, by constructing the initial three-dimensional model based on the average three-dimensional information, the initial three-dimensional model can be converted into various vehicles as accurate as possible, thereby achieving the technical effect of improving the accuracy and reliability of re-identification when re-identification is performed to the target vehicle based on the initial three-dimensional model.

In some embodiments, the sample three-dimensional information includes: three-dimensional parameters of respective sample components of the sample vehicles and identifications of the respective sample components.

That is, in some possible solutions, the sample three-dimensional information can not only describe the sample vehicles from respective parameters (length, width and height of vehicle body, etc.), but also can describe the identifications of the sample components of the sample vehicles, and through describing the relative information of the sample vehicles from the identifications of the sample components and the three-dimensional parameters of the sample components, comprehensiveness and reliability of the description of the sample vehicles can be achieved, thereby achieving the technical effect of accuracy and reliability of the initial three-dimensional model.

In some embodiments, the three-dimensional parameters of the respective sample components are three-dimensional parameters corresponding to preset calibration points of the respective sample components.

That is, the server may select the calibration points based on requirements, historical records and experiments, etc., in advance, and when the initial three-dimensional model is constructed, the three-dimensional parameters corresponding to the calibration points can be determined as the three-dimensional parameters of the sample components.

Preferably, the server may select points having strong representativeness to the relevant information of the sample vehicles as calibration points, for example, connecting points among the sample components.

It is worth to note that, in the present embodiments, by selecting the calibration points and determining the three-dimensional parameters corresponding to the calibration points as the three-dimensional parameters of the respective sample components, disadvantages of large amount of calculation and alike when constructing the initial three-dimensional model based on the three-dimensional parameters of all points can be avoided, thereby achieving the technical effect of reducing the amount of calculation, saving calculating resources and improving constructing efficiency.

S403: acquire a picture of a target vehicle to be re-identified.

For the description of S403, reference may be made to S101, which will not be repeated here.

S404: determine a target two-dimensional image of the target vehicle based on the picture and a preset initial three-dimensional model, the initial three-dimensional model being generated based on sample three-dimensional information of a sample vehicle.

For the description of S404, reference may be made to S102, or reference may be made to S202-S204, which will not be repeated here.

S405: re-identify the target two-dimensional image to generate and output an identification result.

For the description of S405, reference may be made to S103, or, reference may be made to S304, and when referring to S304, S301-S302 in the above-mentioned embodiments may also be referred to, which will not be repeated herein.

According to another aspect of the embodiments of the present application, an embodiment of the present application provides an apparatus for vehicle re-identification, configured to execute the method for vehicle re-identification in any one of the above-mentioned embodiments, for example, configured to execute the method in any one of embodiments shown in FIG. 2-FIG. 5.

Referring to FIG. 6, FIG. 6 is a schematic diagram illustrating an apparatus for vehicle re-identification of an embodiment of the present application.

As shown in FIG. 6, the apparatus includes:
an acquiring module 11, configured to acquire a picture of a target vehicle to be re-identified;
a first determining module 12, configured to determine a target two-dimensional image of the target vehicle based on the picture and a preset initial three-dimensional model, the initial three-dimensional model being generated based on sample three-dimensional information of sample vehicles;
a re-identifying module 13, configured to re-identify the target two-dimensional image to generate and output an identifying result.

In some embodiments, the first determining module 12 is configured to adjust the initial three-dimensional model based on the picture, determine the adjusted initial three-dimensional model satisfying a preset adjusting condition as a target three-dimensional model, where the adjusting condition includes: a similarity between the adjusted initial three-dimensional model and the picture is greater than a preset similarity threshold, and determine the target two-dimensional image according to the target three-dimensional model.

In some embodiments, the first determining module 12 is configured to determine attribute information of respective target components of the target vehicle according to the target three-dimensional model, and splice the respective target components according to the attribute information to generate the target two-dimensional image.

In some embodiments, the attribute information includes: identifications of the target components and the three-dimensional parameters of the target components; the first determining module 12 is configured to determine connecting relationships among the respective target components according to the identifications of the target components and splice the respective target components according to the connecting relationships and the three-dimensional parameters of the respective target components to generate the target two-dimensional image.

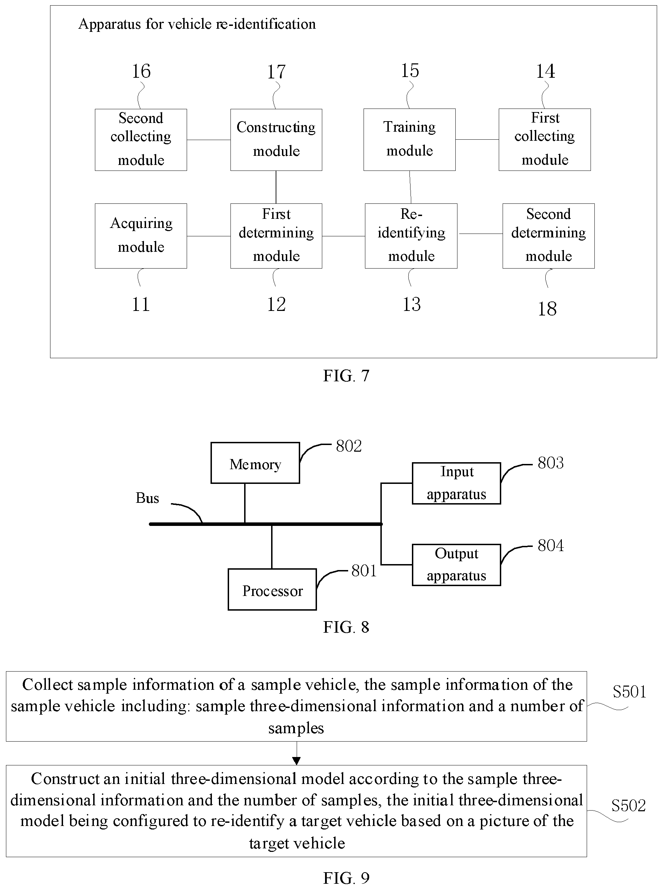

It can be known with reference to FIG. 7, in some embodiments, the apparatus further includes:
a first collecting module 14, configured to collect sample information of a sample two-dimensional image;
a training module 15, configured to train a preset initial network model according to the sample information of the sample two-dimensional image to generate a re-identifying network model; and,
the re-identifying module 13 is configured to input the target two-dimensional image into the re-identifying network model to generate and output the identifying result.

It can be known with reference to FIG. 7, in some embodiments, the apparatus further includes:
a second collecting module 16, configured to collect the sample information of the sample vehicle, the sample information of the sample vehicle including: the sample three-dimensional information and a number of samples; and
a constructing module 17, configured to construct the initial three-dimensional model according to the sample three-dimensional information and the number of samples.

In some embodiments, the constructing module 17 is configured to determine average three-dimensional information according to the sample three-dimensional information and the number of samples; and
train a preset basic model framework according to the average three-dimensional information to generate the initial three-dimensional model.

In some embodiments, the sample three-dimensional information includes: three-dimensional parameters of respective sample components of the sample vehicle and identifications of the respective sample components.

In some embodiments, the three-dimensional parameters of the respective sample components are three-dimensional parameters corresponding to preset calibration points of the respective sample components.

It can be known with reference to FIG. 7 that, in some embodiments, the apparatus further includes:
a second determining module 18, configured to determine tracking and positioning information of the target vehicle according to the identifying result.

According to an embodiment of the present application, the present application further provides an electronic device and a readable storage medium.

According to an embodiment of the present application, the present application further provides a computer program product, including: a computer program, where the computer program is stored in a readable storage medium, at least one processor of an electronic device can read the computer program from the readable storage medium, and the at least one processor executes the computer program to enable the electronic device to execute the solution according to any one of the above embodiments.

According to an embodiment of the present application, the present application further provides a computer program stored in a readable storage medium, where at least one processor of an electronic device can read the computer program from the readable storage medium, and the at least one processor executes the computer program to enable the electronic device to execute the solution according to any one of the above embodiments.

As shown in FIG. 8, FIG. 8 is a block diagram illustrating an electronic device of a method for vehicle re-identification according to the embodiment of the present application. The electronic device intends to represents digital computers of various forms, such as, laptop computers, desktop computers, workstations, personal digital assistants, servers, blade servers, mainframe computers and other suitable computers. The electronic device may further represent mobile devices of various forms, such as personal digital assistant, cellular phones, smart phones, wearable devices and other similar computing devices. The components, their connections and relationships and their functions shown herein are only taken as examples, but are not intended to limit the implementations of the present application described and/or required herein.

As shown in FIG. 8, the electronic device includes: one or more processors 801, a memory 802, and interfaces configured to connect respective components, including a high-speed interface and a low-speed interface. The respective components are mutually connected by using different buses, and can be installed on a common main board or installed in other methods according to requirements. The processor can perform processing to the instructions executed in the electronic device, including instructions stored in the memory or on the memory to display image information of GUI on an external input/output apparatus (such as a display device coupled to an interface). In other embodiments, if needed, multiple processors and/or multiple buses can be used together with multiple memories. Similarly, multiple electronic devices may be connected, and respective devices provide some necessary operations (for example, as a server array, a set of blade servers, or a multiprocessor system). FIG. 8 takes one processor 801 as an example.

The memory 802 is a non-transitory computer-readable storage medium provided by the present application, where the memory stores instructions which can be executed by the at least one processor, to cause the at least one processor to execute the method for vehicle re-identification provided by the present application. The non-transitory computer-readable storage medium of the present application stores computer instructions which are used to cause the computer to execute the method for vehicle re-identification provided by the present application.

The memory 802, as a non-transitory computer-readable storage medium, can be configured to store non-transitory software programs, and non-transitory computer executable programs and modules, for example, program instructions/modules corresponding to the method for vehicle re-identification provided by the present application. The processor 801 executes various functional applications and digital processing of the server by running non-transitory software program, instructions and modules stored in the memory 802, that is, implements the method for vehicle re-identification in the above-mentioned method embodiments.

The memory 802 may include a program-storage section and a data-storage section, where the program-storage section may store an operating system, and an application program required by at least one function; the data-storage section may store data created in the use of the electronic device according to the method for vehicle re-identification. In addition, the memory 802 may include a high-speed random access memory, may also include a non-transitory memory, for example at least one disk storage component, flash component, or other non-transitory solid state storage component. In some embodiments, the memory 802 optionally includes memories remotely set relative to the processor 801, and the remote memories can connect to the electronic device of the method for vehicle re-identification through a network. Examples of the above-mentioned network include, but are not limited to, the Internet, intranet, local area network, mobile communication network and combinations thereof.

The electronic device of the method for vehicle re-identification may further include: an input apparatus 803 and an output apparatus 804. The processor 801, the memory 802, the input apparatus 803 and the output apparatus 804 may be connected through a bus or other methods, and FIG. 8 takes connecting through a bus as an example.

The input apparatus 803 can receive numeral or character information inputted, and generate key signal input related to user setting and function control of the electronic device of the method for vehicle re-identification, such as, a touch screen, a keypad, a mouse, a track pad, a touch pad, an indicator stick, one or more mouse buttons, a trackball, an operating stick and other input devices. The output apparatus 804 may include a display device, an auxiliary lighting apparatus (e.g., a LED) and a haptic feedback apparatus (e.g., a vibration motor), etc. The display apparatus may include, but is not limited to, an liquid crystal display (LCD), a light emitting diode (LED) display and a plasma display. In some embodiments, the display device may be a touch screen.

Various embodiments of the systems and the technologies described herein can be implemented in a digital electronic circuit system, an integrated circuit system, a specific ASIC (application specific integrated circuits), computer hardware, firmware, software and/or a combination thereof. The various embodiments may include: being implemented in one or more computer programs, where the one or more computer programs can be executed and/or interpreted in a programmable system including at least one programmable processor, the programmable processor may be a specific or general programmable processor, which can receive data and instructions from a storage system, at least one input apparatus, and at least one output apparatus, and transfer the data and instructions to the storage system, the at least one input apparatus, and the at least one output apparatus.

The computer programs (also called programs, software, software applications, or codes) include machine instructions of the programmable processor, and can be implemented by using advanced procedures and/or object-oriented programming languages, and/or assembly/machine languages. As used herein, terms "machine-readable medium" and "computer-readable medium" refer to any computer program products, devices, and/or apparatuses (e.g., magnetic disks, optical disks, memories, programmable logic devices (PLD)) configured to provide the machine instructions and/or data to the programmable processor, including machine-readable mediums receiving machine instructions as machine-readable signals. The term "machine-readable signal" refers to any signals configured to provide the machine instructions and/or data to the programmable processor.

In order to provide interactions with users, the systems and technologies described herein can be implemented on a computer, the computer including: a display apparatus configured to display information to users (for example, CRT (Cathode Ray Tube) or LCD (Liquid Crystal Display) monitor); and a keyboard and a pointing apparatus (for example, a mouse or a trackball), through which a user can provide an input to the computer. Other forms of apparatuses may further be configured to provide interactions with users; for example, the feedback provided to users may be any form of sensory feedbacks (for example, visual feedback, auditory feedback, or haptic feedback); and the input from users may be received in any forms (including sound input, voice input or haptic input).

The systems and technologies described herein can be implemented in a computing system including a background component (e.g. as a data server), or a computing system including a middleware component (e.g. an application server), or a computing system including a front-end component (e.g. a user computer with a graphical user interface or a web browser through which a user can interact with the embodiments of the systems and technologies described herein), or a computing system including any combinations of such background component, middleware component, or front-end component. The components of the system may be mutually connected through digital data communication of any forms or mediums (for example, communication network). The examples of the communication network includes: local area network (LAN), block-chain-based service network (BSN), wide area network (WAN) and the Internet.

The computer system may include a client and a server. The client and the server are usually remote from each other and interact with each other through a communication network. The relationship between the client and the server is generated by running computer programs with mutual client-server relationship on corresponding computers. The server may be a cloud server, also called cloud computing server or cloud host, which is a host product in a cloud computing service system, having solved the existing disadvantage of high-difficulty in management and weakness in business scalability in conventional physical host and virtual private server (VPS) service.

According to another aspect of the embodiments of the present application, an embodiment of the present application provides a method for model training.

Referring to FIG. 9, FIG. 9 is a flow chart illustrating a method for model training of the embodiment of the present application.

As shown in FIG. 9, the method includes:
S501: collect sample information of a sample vehicle, the sample information of the sample vehicle including: sample three-dimensional information and a number of samples.

S502: construct an initial three-dimensional model according to the sample three-dimensional information and the number of samples, the initial three-dimensional model being configured to re-identify a target vehicle based on a picture of the target vehicle.

It should be understood that, the steps may be rearranged, added or deleted by using the above procedures of various forms. For example, respective steps recorded in the present application may be executed in parallel, or be executed sequentially, or be executed in different orders, as long as the expected result of the technical solutions disclosed in the present application can be implemented, which will not be limited herein.

The above-mentioned embodiments do not limit the protection scope of the present application. Those of ordinary skill in the art shall understand that, according to design requirements and other factors, various modifications, combinations, sub-combinations and substitutions can be performed. Any modifications, equivalent substitutions and improvements, etc., within the spirit and principle of the present application are all included in the protection scope of the present application.

## Claims

1. A method for vehicle re-identification, comprising:
acquiring (S101) a picture of a target vehicle to be re-identified;
determining (S102) a target two-dimensional image of the target vehicle based on the picture and a preset initial three-dimensional model, the initial three-dimensional model being generated based on sample three-dimensional information of a sample vehicle;
re-identifying (S103) the target two-dimensional image to generate and output an identification result.

2. The method according to claim 1, wherein the determining a target two-dimensional image of the target vehicle based on the picture and a preset initial three-dimensional model comprises:
adjusting (S202), based on the picture, the initial three-dimensional model;
determining (S203) the adjusted initial three-dimensional model that satisfies a preset adjusting condition as a target three-dimensional model, wherein the adjusting condition comprises: a similarity between the adjusted initial three-dimensional model and the picture is greater than a preset similarity threshold;
determining (S204) the target two-dimensional image according to the target three-dimensional model.

3. The method according to claim 2, wherein the determining the target two-dimensional image according to the target three-dimensional model comprises:
determining attribute information of respective target components of the target vehicle according to the target three-dimensional model;
splicing the respective components according to the attribute information to generate the target two-dimensional image.

4. The method according to claim 3, wherein the attribute information comprises: identifications of the target components and three-dimensional parameters of the target components; the splicing the respective components according to the attribute information to generate the target two-dimensional image comprises:
determining a connecting relationship among the respective target components according to the identifications of the target components;
splicing the respective components according to the connecting relationship and the three-dimensional parameters of the respective target components to generate the target two-dimensional image.

5. The method according to any one of claims 1 to 4, further comprising:
collecting (S301) sample information of a sample two-dimensional image;
training (S302) a preset initial network model according to the sample two-dimensional image to generate a re-identifying network model; and
the re-identifying the target two-dimensional image to generate and output an identification result comprises: inputting (S305) the target two-dimensional image into the re-identifying network model to generate and output the identification result.

6. The method according to any one of claims 1 to 4, further comprising:
collecting (S401) sample information of the sample vehicle, the sample information of the sample vehicle comprises: the sample three-dimensional information and a number of samples;
constructing (S402) the initial three-dimensional model according to the sample three-dimensional information and the number of samples.

7. The method according to claim 6, wherein the constructing the initial three-dimensional model according to the sample three-dimensional information and the number of samples comprises:
determining average three-dimensional information according to the sample three-dimensional information and the number of samples.
training a preset basic model framework according to the average three-dimensional information to generate the initial three-dimensional model.

8. The method according to claim 7, wherein the sample three-dimensional information comprises: three-dimensional parameters of the respective sample components of the sample vehicle and identifications of the respective sample components.

9. The method according to claim 8, wherein the three-dimensional parameters of the respective sample components are three-dimensional parameters corresponding to preset calibration points of the respective sample components.

10. The method according to any one of claims 1 to 4, further comprising:
determining tracking and positioning information of the target vehicle according to the identification result.

11. An electronic device, comprising:
at least one processor; and
a memory, communicatively connected to the at least one processor; wherein,
the memory stores instructions executable by the at least one processor, the instructions being executed by the at least one processor, to enable the at least one processor to execute the method according to any one of claims 1 to 10.

12. A non-transitory computer-readable storage medium, having computer instructions stored thereon, the computer instructions being configured to cause a computer to execute the method according to any one of claims 1 to 10.

13. A computer program product, comprising a computer program, which, when executed by a processor, executes the method according to any one of claims 1 to 10.

14. A computer program, configured to, when executed by a processor, execute the method according to any one of claims 1 to 10.

15. A method for model training, comprising:
collecting (S501) sample information of a sample vehicle, the sample information of the sample vehicle comprising: sample three-dimensional information and a number of samples;
constructing (S502) an initial three-dimensional model according to the sample three-dimensional information and the number of samples, the initial three-dimensional model being configured to re-identify a target vehicle based on a picture of the target vehicle.
